# EUROPÄISCHE PATENTANMELDUNG

(11) **EP 1 557 776 A1**
(43) Veröffentlichungstag der Anmeldung: **27.07.2005**
(21) Anmeldenummer: 04001564.6
(22) Anmeldetag: 26.01.2004
(51) Int. Cl.: G06F 17/60, G07F 19/00, G07F 7/08

(54) **Verfahren zur Abwicklung von serverbasierten und rechnergestützten Zahlungstransaktionen**

(71) Anmelder: Papagrigoriou, Paschalis, 90482 Nürnberg (DE)
(72) Erfinder: Papagrigoriou, Paschalis, 90482 Nürnberg (DE)
(74) Vertreter: Hilleringmann, Jochen, Dipl.-Ing.

(57) **Zusammenfassung**

Verfahren zur Abwicklung von Zahlungstransaktionen unter Verwendung einer zentralen server- und rechnergestützten technischen Lösung (kurz "zentraler Server") eines Dienstleisters auf der Basis der Infrastruktur eines Zahlungssystems für elektronische Geldbörsen und bargeldlose Zahlungsmitteln (im folgenden "elektronisches Geldbörsensystem"), das grundsätzlich den Regeln und Prinzipien des in der Bundesrepublik Deutschland von den kreditwirtschaftlichen Verbänden vereinbarten Institutsübergreifenden Systems "Geldkarte" entspricht. Das deutsche kreditinstitutsübergreifende System "Geldkarte" ist durch Mindestmerkmale charakterisiert, wie die elektronische Geldbörse, namens "Geldkarte", welche als Chipkarte die Geldbörsenfunktionen zur Verfügung stellt und in hierfür eingerichteten Terminals (Geldkarten-Terminals) verwendet wird sowie die "Händlerkarte", welche die Aktivierung der Geldkarten-Terminals ermöglicht, damit die Kommunikation zwischen Geldkarte und Händlerkarte innerhalb des Terminals beim Kauf abgewickelt werden kann und die Speicherung und Bereitstellung von Einzelumsätzen und die Weiterleitung von Umsätzen an die Evidenzzentrale erfolgen kann. Die oben genannten Zahlungstransaktionen sind Abbildungen von weiteren Bezahlvorgängen auf der Basis eines weiteren Zahlungssystems, initiiert zwischen einem Händler (bezeichnet als "Händlerkunde" und einem seiner Kunden (bezeichnet als "Endkunde"). Händlerkunde und Endkunde sind gleichzeitig beim Dienstleister als Kunden registriert und übermittelt an diesen für die Definition der Abbildung vorgesehene und beim Bezahlvorgang entstehende Daten.

## Beschreibung

Die Erfindung betrifft ein Verfahren zur Abwicklung von Zahlungstransaktionen unter Verwendung einer zentralen server- und rechnergestützten technischen Lösung (im folgenden "zentraler Server") eines Dienstleisters (3) auf der Basis der Infrastruktur eines Zahlungssystems für elektronische Geldbörsen und bargeldlosen Zahlungsmitteln (im folgenden "elektronisches Geldbörsensystem"), das grundsätzlich den Regeln und Prinzipien des in der Bundesrepublik Deutschland von den kreditwirtschaftlichen Verbänden vereinbarten Institutsübergreifenden Systems "Geldkarte" entspricht bzw. angelehnt ist.

Das deutsche kreditinstitutsübergreifende System "Geldkarte" ist durch Mindestmerkmale charakterisiert, wie die elektronische Geldbörse namens "Geldkarte", welche als Chipkarte die Geldbörsenfunktionen zur Verfügung stellt und in hierfür eingerichteten Terminals (Geldkarten-Terminals) verwendet wird, sowie die "Händlerkarte", welche die Aktivierung der Geldkarten-Terminals ermöglicht, damit die Kommunikation zwischen Geldkarte und Händlerkarte innerhalb des Terminals beim Kauf abgewickelt werden kann und die Speicherung und Bereitstellung von Einzelumsätzen und die Weiterleitung von Umsätzen an die Evidenzzentrale erfolgen kann. Die oben genannten Zahlungstransaktionen sind Abbildungen von weiteren Bezahlvorgängen, auf der Basis eines weiteren Zahlungssystems, initiiert zwischen einem Händler (im folgenden "Händlerkunden") und einem seiner Kunden (im folgenden "Endkunde"). Händlerkunde und Endkunde sind gleichzeitig beim Dienstleister als Kunden registriert und übermitteln an diesen für die Definition der Abbildungen vorgesehene und beim Bezahlvorgang entstehende Daten.

Das erfindungsgemäße Verfahren umfasst die folgenden Merkmale:
a) Eine oder mehrere Geldkarten nach dem elektronischen Geldbörsensystem wird/werden von einem oder mehreren kartenausgebenden Kreditinstituten dem Dienstleister zur Verfügung gestellt, in seinem zentralen Server integriert und über zugelassene Geldkarten-Terminals, ebenfalls im zentralen Server integriert und wie im elektronischen Geldbörsensystem standardisiert, verwendet. Die Geldkarten sind kontogebunden oder kontoungebunden.
b) Eine oder mehrere Händlerkarten nach dem elektronischen Geldbörsensystem wird/werden von einem oder mehreren kartenausgebenden Kreditinstituten dem Dienstleister zur Verfügung gestellt oder solche Händlerkarten im Namen der Händlerkunden samt der vorgeschriebenen Infrastruktur vom Dienstleister betrieben, in seinem zentralen Server integriert und über zugelassene Geldkarten-Terminals, wie im elektronischen Geldbörsensystem standardisiert, verwendet. Die Händlerkarten liegen physisch oder als Softwarelösungen (virtuelle Händlerkarten) vor und können eine eins zu eins Abbildung zu den Geldkarten haben, müssen dies aber notwendigerweise nicht.
c) Jeder Bezahlvorgang zwischen einem Endkunden und einem Händlerkunden des Dienstleisters, und nach Übertragung der benötigten Daten zum Dienstleister. (z.B. Identifikationszeichenfolge des Endkunden und des Händlerkunden, Rechnungsvorgangsdaten/Rechnungsbetrag etc.) vom Dienstleister über ein kassenähnliches Steuerungssystem als eine auf einer seiner Geldkarten als Geldkartentransaktion wird vom Guthaben dieser Geldkarte abgebucht und auf die dem Händlerkunden zugeordnete Händlerkarte als Geldkartentransaktion sicher gespeichert. Nach einer Abrechnung (in der Regel täglich) werden, wie im elektronischen Geldbörsensystem vorgesehen, die gespeicherten Zahlvorgänge auf den Händlerkarten vom Dienstleister bei der zuständigen Evidenzzentrale bzw. bei einem angeschlossenen Rechenzentrum eingereicht und im üblichen Verfahren des elektronischen Geldbörsensystem die Umsätze auf der Händlerkarte an die Händlerkunden weitergegeben.

Vorteilhafterweise läuft der Ladevorgang der Geldkarten wie im elektronischen Geldbörsensystem standardisiert ab (und zwar über Infrastruktur für Internet oder über spezifischen Geldkarten-Ladeterminals für kontogebundene oder kontoungebundene Geldkarten).

In weiterer Ausgestaltung der Erfindung ist vorgesehen, dass die Abwicklung auch von größeren Transaktionsvolumina durch den Dienstleister mit jeweils einer seiner Geldkarten erfolgt, indem vom kartenausgebenden Kreditinstitut bei Ausgabe der Geldkarten der derzeitig übliche Höchstbetrag angehoben wird.

Ferner ist es vorteilhaft, wenn die Händlerkunden, als Kunden des Dienstleisters, eine weitere neue Bezahlart für ihre Waren oder ihre Dienstleistungen anbieten, indem sie sich beim Dienstleister registrieren, eine Vertragsbeziehung eingehen und die für den Bezahlvorgang mit ihren Kunden (Endkunden) benötigte technische Einrichtungen installieren.

In vorteilhafter Weiterbildung der Erfindung ist vorgesehen, dass die Endkunden eines Händlerkunden des Dienstleisters bei diesem Dienstleister registriert sind und über ein prepaid-ähnliches oder guthabenbasiertes System oder eine Kontovereinbarung in Verbindung stehen. Nach dem Kauf einer prepaid-Karte des Dienstleisters oder nach einer Anmeldung (z.B. online) und anschließender Einzahlung eines Geldbetrages (per Kreditkarte, per Überweisung etc.) auf der Basis des Tarifmodells des Dienstleisters erhalten die Endkunden ihre Zugangsdaten (eindeutige Identifikationszeichenfolge, Passwort etc.) zur Nutzung der neuen Bezahlart beim Händlerkunden. Der eingezahlte Betrag eines Endkunden oder die ausgegebenen prepaid-Karten werden vom Dienstleister in Form eines Kontos für den Endkunden oder pro prepaid-Karte verwaltet.

Zweckmäßig ist es ferner, wenn der Endkunde den Bezahlvorgang nach Auswahl der neuen Bezahlart bei einem Händlerkunden des Dienstleisters mit seinen Zugangsdaten vornimmt. Rechtsverbindliche Zahlungsbestätigungen oder Autorisierungsprüfungen werden vorzugsweise mit sicheren Systemen direkt beim Händlerkunden (z.B. im Internet oder einem im point of sale hierfür eingebauten Mechanismus oder über den Dienstleister (z.B. im Internet über eine direkte Verbindung zum Dienstleister oder per Telefonanruf durch den Dienstleister oder mit Hilfe eines SMS-Dienstes)) vorgenommen. Im Fall der Zahlungsbestätigung und Autorisierungsprüfungen per Telefon oder SMS über den Dienstleister werden aktuelle Telefonnummern des Endkunden beim Dienstleister gehalten und verwendet.

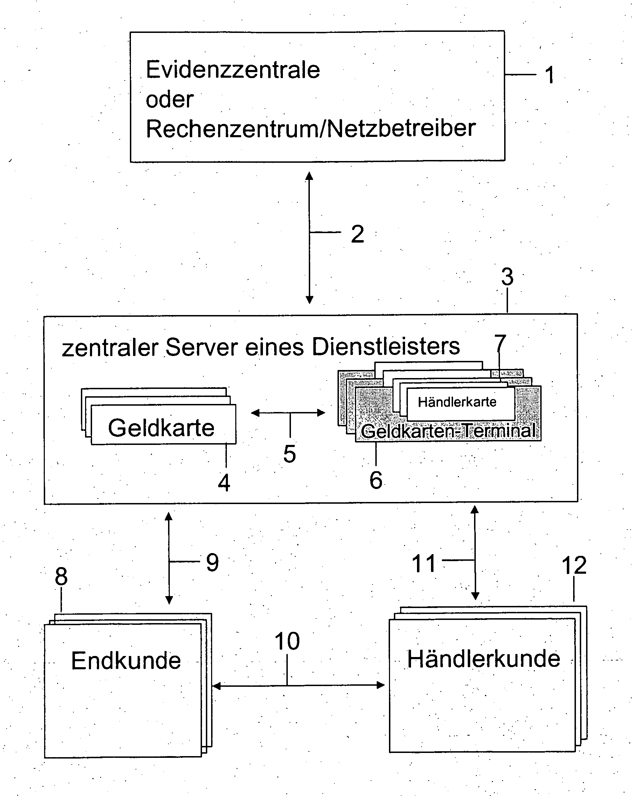

Die für den Ablauf des Verfahrens wesentlichen Merkmale und technischen Bestandteile sind in der Zeichnung dargestellt. Die Bezugsziffern haben folgende Bedeutung:
1. Evidenzzentrale oder je nach geschäftspolitischen Entscheidung ein Rechenzentrum eines Kreditinstituts oder eines Netzbetreibers nach den Vorgaben des elektronischen Geldbörsensystems.
2. Anbindung des zentralen Servers des Dienstleisters zur Evidenzzentrale über ein Telekommunikationsnetz zur Abwicklung der beim Server des Dienstleisters generierte Zahlungstransaktionen nach Vorgabe des elektronischen Geldbörsensystems.
3. Zentraler Server, betrieben durch einen Dienstleister. Für die Abwicklung der geldkartenbasierte Transaktionen sind Infrastruktur für Geldkarten und Händlerkarten nach den Vorgaben des elektronischen Geldbörsensystems integriert. Über einen kassensystem-ähnlichen Automatismus werden die Bezahlvorgänge zwischen' Endkunden und Händlerkunden aufgenommen und als Geldkartentransaktionen innerhalb der Komponenten des elektronischen Geldbörsensystems abgebildet.
4. Geldkarten nach Standard des elektronischen Geldbörsensystems.
5. Schnittstelle zwischen Geldkarte und Händlerkarte innerhalb eines Geldkarten-Terminals nach Standard des elektronischen Geldbörsensystems.
6. Geldkarten-Terminals nach Standard des elektronischen Geldbörsensystems. Mehrere derartige Terminals von mehreren Händlern sind in einem zentralen Server integriert und vernetzt.
7. Händlerkarten nach Standard des elektronischen Geldbörsensystems.
8. Endkunde als Halter einer prepaid-Karte des Dienstleisters oder über eine Kontovereinbarung mit dem Dienstleister, registriert als möglicher Teilnehmer für die Nutzung des Bezahlverfahrens bei einem Händlerkunden.
9. Schnittstelle zwischen Dienstleister und Endkunde für deren online-Anmeldung oder Stammdatenverwaltung (z.B. Internet) und für die Abwicklung der Autorisierungsprüfung und Bestätigung von Zahlungen für den Kauf einer Ware oder Dienstleistung bei einem Händlerkunden sowie die Übertragung der notwendigen Daten.
10. Schnittstelle zwischen Endkunde und Händlerkunde (z.B. web-shop oder Point of sales) für die Initialisierung eines Bezahlvorgangs und Abwicklung eines Kaufsvorgangs.
11. Schnittstelle zwischen Dienstleister und Händlerkunde für seine Autorisierungsprüfung und Übermittlung der Daten eines Bezahlvorgangs eines Endkunden.
12. Händlerkunde als Kunde eines Dienstleisters und welcher ein Bezahlverfahren des Dienstleisters für seine Endkunden anbietet.

## Patentansprüche

1. Verfahren zur Abwicklung von Zahlungstransaktionen unter Verwendung einer zentralen server- und rechnergestützten technischen Lösung (im folgenden "zentraler Server") eines Dienstleisters (3) auf der Basis der Infrastruktur eines Zahlungssystems für elektronische Geldbörsen und bargeldlosen Zahlungsmitteln (im folgenden "elektronisches Geldbörsensystem"), das grundsätzlich den Regeln und Prinzipien des in der Bundesrepublik Deutschland von den kreditwirtschaftlichen Verbänden vereinbarten Institutsübergreifenden Systems "Geldkarte" entspricht,
- wobei die zuvor genannten Zahlungstransaktionen Abbildungen von weiteren Bezahlvorgängen auf der Basis eines weiteren Zahlungssystems sind, die zwischen einem Händler (im folgenden "Händlerkunden") und einem seiner Kunden (im folgenden "Endkunde") initiiert sind,
- wobei Händlerkunde und Endkunde gleichzeitig beim Dienstleister als Kunden registriert sind und an diesen für die Definition der Abbildungen vorgesehene und beim Bezahlvorgang entstehende Daten übermitteln, und
- wobei das Verfahren **dadurch gekennzeichnet ist, dass**
a) eine oder mehrere Geldkarten nach dem elektronischen Geldbörsensystem von einem oder mehreren kartenausgebenden Kreditinstituten dem Dienstleister zur Verfügung gestellt sind, in seinem zentralen Server integriert sind (4) und über zugelassene Geldkarteh-Terminals, ebenfalls im zentralen Server integriert (6) und wie im elektronischen Geldbörsensystem standardisiert, verwendet werden (5),
b) eine oder mehrere Händlerkarten nach dem elektronischen Geldbörsensystem von einem oder mehreren kartenausgebenden Kreditinstituten dem Dienstleister zur Verfügung gestellt sind oder solche Händlerkarten im Namen der Händlerkunden samt der vorgeschriebenen Infrastruktur vom Dienstleister betrieben, in seinem zentralen Server integriert sind und über zugelassene Geldkarten-Terminals, wie im elektronischen Geldbörsensystem standardisiert, verwendet werden (7), wobei die Händlerkarten physisch oder als Softwarelösungen (virtuelle Händlerkarten) vorliegen, und
c) jeder Bezahlvorgang initiiert zwischen einem Endkunden und einem Händlerkunden des Dienstleisters (10) und nach Übertragung (9,11) der den Bezahlvorgang betreffenden Daten zum Dienstleister (z.B. Identifikationszeichenfolge des Endkunden und des Händlerkunden, Rechnungsvorgangsdaten/Rechnungsbetrag etc.) vom Dienstleister über ein kassenähnliches Steuerungssystem als eine auf einer seiner Geldkarten als Geldkarteritransaktion vom Guthaben dieser Geldkarte abgebucht und auf die dem Händlerkunden zugeordnete Händlerkarte als Geldkartentransaktion sicher gespeichert wird (5), wobei nach einer Abrechnung (in der Regel täglich), wie im elektronischen Geldbörsensystem vorgesehen, die gespeicherten Bezahlvorgänge auf den Händlerkarten vom Dienstleister bei der zuständigen Evidenzzentrale bzw. bei einem angeschlossenen Rechenzentrum eingereicht (1,2) und im üblichen Verfahren des elektronischen Geldbörsensystem die Umsätze auf der Händlerkarte an die Händlerkunden weitergegeben werden.

2. Verfahren nach Anspruch 1, **dadurch gekennzeichnet, dass** der Ladevorgang der Geldkarten wie im elektronischen Geldbörsensystem standardisiert abläuft (über Infrastruktur für Internet oder über spezifischen Geldkarten-Ladeterminals für kontogebundene oder kontoungebundene Geldkarten).

3. Verfahren nach Anspruch 1 und 2, **dadurch gekennzeichnet, dass** die Abwicklung auch von größeren Transaktionsvolumina durch den Dienstleister mit jeweils einer seiner Geldkarten erfolgt, indem von kartenausgebendeh Kreditinstitut bei Ausgabe der Geldkarten der derzeitig übliche Höchstbetrag angehoben wird.

4. Verfahren nach Anspruch 1 bis 3, **dadurch gekennzeichnet, dass** Händlerkunden als Kunden des Dienstleisters eine weitere neue Bezahlart für ihre Waren oder ihre Dienstleistungen anbieten, indem sie sich beim Dienstleister registrieren lassen, eine Vertragsbeziehung eingehen und die für den Bezahlvorgang (10) mit ihren Kunden (Endkunden) benötigte technische Einrichtungen installieren.

5. Verfahren nach Anspruch 1 bis 4, **dadurch gekennzeichnet, dass** Endkunden eines Händlerkunden des Dienstleisters bei diesem Dienstleister registriert sind und über ein prepaid-ähnliches oder guthabenbasiertes System oder eine Kontovereinbarung in Verbindung stehen, wobei die Endkunden nach dem Kauf einer prepaid-Karte des Dienstleisters oder nach einer Anmeldung (z.B. online) und anschließender Einzahlung eines Geldbetrages (per Kreditkarte, per Überweisung etc.) auf der Basis des Tarifmodells des Dienstleisters ihre Zugangsdaten (eindeutige Identifikationszeichenfolge, Passwort etc.) zur Nutzung der neuen Bezahlart beim Händlerkunden (10,9) erhalten und der eingezahlte Betrag eines Endkunden oder die ausgegebenen prepaid-Karten werden vom Dienstleister in Form eines Kontos für den Endkunden oder pro prepaid-Karte verwaltet werden.

6. Verfahren nach Anspruch 1 bis 5, **dadurch gekennzeichnet, dass** der Endkunde den Bezahlvorgang nach Auswahl der neuen Bezahlart bei einem Händlerkunden des Dienstleisters mit seinen Zugangsdaten vornimmt, wobei rechtsverbindliche Zahlungsbestätigungen oder Autorisierungsprüfungen vorzugsweise mit sicheren Systemen direkt beim Händlerkunden (z.B. im Internet oder einem im point of sale hierfür eingebauten Mechanismus oder über den Dienstleister (z.B. im Internet über eine direkte Verbindung zum Dienstleister oder per Telefonanruf durch den Dienstleister oder mit Hilfe eines SMS-Dienstes)) vorgenommen werden.
